Europäisches Patentamt

European Patent Office

Office européen des brevets

(19)

(11) **EP 0 642 005 B1**

(12) **FASCICULE DE BREVET EUROPEEN**

(45) Date de publication et mention
de la délivrance du brevet:
**15.10.1997 Bulletin 1997/42**

(51) Int Cl.⁶: **G01J 3/28**

(21) Numéro de dépôt: **94401953.8**

(22) Date de dépôt: **02.09.1994**

(54) **Dispositif optique d'imagerie permettant l'analyse spectrale d'une scène**

Optische Abbildungsvorrichtung für die Spektralanalyse einer Szene

Optical imaging device for the spectral analysis of a scene

(84) Etats contractants désignés:
**DE FR GB IT**

(30) Priorité: **07.09.1993 FR 9310618**

(43) Date de publication de la demande:
**08.03.1995 Bulletin 1995/10**

(73) Titulaire: **THOMSON-CSF
75008 Paris (FR)**

(72) Inventeurs:
• **Fontanella, Jean-Claude
F-92402 Courbevoie Cédex (FR)**
• **Remy, Bertrand
F-92402 Courbevoie Cédex (FR)**

(74) Mandataire: **Lincot, Georges et al
THOMSON-CSF-S.C.P.I.,
13, Avenue du Président
Salvador Allende
94117 Arcueil Cédex (FR)**

(56) Documents cités:
**EP-A- 0 195 339        US-A- 5 050 989**

• **PROCEEDINGS IEEE SOUTHEASTCON '92, 12
Avril 1992, BIRMINGHAM, ALABAMA 1 pages
363 - 367 J.S.SANDERS ET AL. 'A NOVEL
CONCEPT FOR HYPERSPECTRAL REMOTE
SENSING'**
• **PATENT ABSTRACTS OF JAPAN vol. 17, no. 66
(P-1484) 9 Février 1993 & JP-A-04 274 715
(MITSUBISHI ELECTRIC CORP.) 30 Septembre
1992**

## Description

La présente invention concerne un dispositif optique d'imagerie, notamment une caméra infrarouge dans laquelle est inséré un dispositif optique permettant l'analyse spectrale d'une scène visualisée par la caméra.

Le domaine est celui de l'imagerie spectrale notamment dans le spectre infrarouge thermique. Les applications vont à la mesure de la signature spectrale d'une cible, au décamouflage par l'analyse spectrale de la signature thermique de la cible et à la détection de gaz.

Le domaine de l'imagerie spectrale est un domaine technique qui a déjà été largement étudié aussi bien pour des problèmes de ressources terrestres, tels que l'identification des sols ou des végétaux à partir de leur spectre observé depuis un satellite, que pour les problèmes posés par l'astronomie, notamment dans l'analyse de la composition des sources stellaires à partir de leur spectre.

Une solution connue pour l'analyse spectrale d'une scène consiste à former successivement une image de chaque point du champ optique observé sur la fente d'entrée d'un spectromètre. Cette solution de mise en oeuvre assez longue a généralement été abandonnée depuis l'apparition des mosaïques de détecteurs.

Des dispositifs optiques connus utilisant une mosaïque de détecteurs sont basés sur le principe suivant :

Un spectre déterminé est obtenu à partir de chaque point d'une ligne déterminée du champ optique, ou scène, observé. Un dispositif de balayage placé en tête d'un spectro-imageur permet d'obtenir successivement toutes les lignes du champ. Ces dispositifs sont donc des dispositifs spécialisés dédiés à la spectro-imagerie. Le principe mis en oeuvre par ces dispositifs a également été adapté à la spectrométrie par transformée de Fourier: chaque point du champ correspondant à un pixel de l'image formée sur la mosaïque de détecteurs, est observé au travers d'un interféromètre de type Michelson ou de l'un de ses dérivés. Ainsi pour chaque point un interférogramme est obtenu et le spectre correspondant à chaque point est restitué par transformée de Fourier. Il s'agit là encore de dispositifs très spécifiques.

Le but de l'invention est de permettre la transformation d'une caméra infrarouge possédant un plan image intermédiaire en un spectro-imageur.

A cet effet l'invention a pour objet un dispositif optique d'imagerie permettant l'analyse spectrale d'une scène comportant, centré sur un même axe optique, un miroir oscillant autour d'un axe de rotation perpendiculaire à l'axe optique du dispositif pour le balayage de la scène et réfléchissant le rayonnement émis par la scène sur un objectif d'entrée, un plan image intermédiaire correspondant au plan focal de l'objectif d'entrée, une optique de reprise concentrant le rayonnement sur la face sensible d'un détecteur, caractérisé en ce qu'il comporte en outre pour l'analyse spectrale de la scène, d'une part, un masque disposé dans le plan image intermédiaire et comportant un nombre déterminé de fentes laissant passer chacune une partie déterminée de l'image de la scène, la grande dimension des fentes étant parallèle à des lignes de détecteurs élémentaires constituant le détecteur et perpendiculaire à l'axe de rotation du miroir, et d'autre part, une optique dispersive disposée dans le chemin optique du dispositif au voisinage de l'optique de reprise et séparant un nombre déterminé de longueurs d'onde issues du masque, l'optique dispersive étant déterminée pour disperser chaque longueur d'onde dans une direction respective déterminée pour couvrir toute la face sensible du détecteur lors du balayage de la scène.

L'un des principaux avantages de l'invention est de permettre la transformation d'une caméra infrarouge en un spectro-imageur sans transformation majeure de la caméra. De plus, le dispositif selon l'invention peut être escamotable permettant de passer de la fonction imagerie à la fonction analyse spectrale et inversement.

D'autres avantages et caractéristiques de l'invention apparaîtront plus clairement en regard des dessins annexés qui représentent :

- la figure 1, un schéma pour illustrer le principe de mise en oeuvre de l'invention,
- la figure 2, un schéma optique d'un mode de réalisation d'un dispositif selon l'invention,
- la figure 3, un exemple de masque d'un dispositif selon l'invention,
- la figure 4, un exemple de géométrie d'un détecteur d'un dispositif selon l'invention,
- la figure 5, l'image du masque de la figure 3 dans le plan du détecteur,
- la figure 6, une image spectrale de la scène observée par le dispositif selon l'invention,
- les figures 7a et 7b, respectivement, un schéma optique simplifié d'un dispositif selon l'invention utilisant une optique dispersive différente,
- la figure 8, un mode de réalisation d'une optique dispersive avec correction,
- la figure 9, une répartition de filtres interférentiels sur le détecteur.

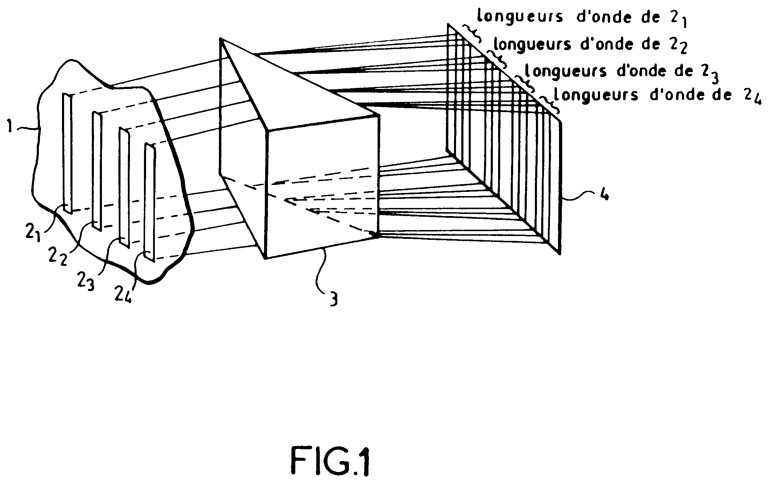

Selon le schéma de la figure 1 un masque plan 1 de forme quelconque comportant un nombre déterminé de fentes rectangulaires parallèles,seulement quatre fentes $2_1$ à $2_4$ étant représentées sur la figure à titre d'exemple, permet de sélectionner certaines parties de l'image d'une scène observée. Le masque 1 est placé dans le plan image intermédiaire PI correspondant au plan focal intermédiaire d'un objectif d'entrée non représenté recevant le rayonnement de la scène observée. Une optique dispersive 3, représentée sur la figure par un prisme, sépare les différentes longueurs d'onde issues de chaque fente 21 à 24 du masque 1. Elle est déterminée de manière à ce que la face sensible d'un détecteur 4 comportant une barrette ou une mosaïque de détecteurs élémentaires, par exemple des détecteurs CCD, soit entièrement couverte par le rayonnement issu des fentes. Ce principe dans son ensemble isole donc des parties successives de la scène observée, disperse le rayonnement de chaque partie de la scène et le répartit sur la face sensible du détecteur 4.

Afin de compenser partiellement la perte de rapport signal à bruit qui résulte de la dispersion des longueurs d'onde, la face arrière du masque 1 peut être avantageusement rendue réfléchissante pour réfléchir la propre image du détecteur 4, lui-même refroidi. Ceci permet de diminuer la contribution du fond thermique incident sur le détecteur 4 et donc de réduire son bruit photonique propre dans le cas où le bruit prédominant est le bruit de photons généré par le fond, ce qui est en général le cas des détecteurs modernes dans de telles configurations appelées également situations BLIP, abréviation anglo-saxonne pour "Background Limited Infrared Photodetection".

Le principe de la figure 1 qui vient d'être décrit définit la fonction d'analyse spectrale du dispositif; selon l'invention, cette fonction d'analyse spectrale est intégrée à l'intérieur d'un dispositif optique d'imagerie et notamment d'une caméra infrarouge.

Une telle caméra comporte généralement un objectif afocal de tête constitué par exemple de deux lentilles convergentes. Elle comporte ensuite un miroir de balayage, oscillant, associé à un ensemble de motorisation et de commande permettant une succession de balayages linéaires et de retours ligne rapide de fréquence égale par exemple à 50 Hz. Le rayonnement est réfléchi par le miroir oscillant sur un objectif qui concentre le faisceau lumineux vers un plan focal intermédiaire situé en son foyer. Elle comporte ensuite un objectif de reprise, composé par exemple de deux lentilles convergentes qui focalisent le rayonnement sur la face sensible d'un détecteur.

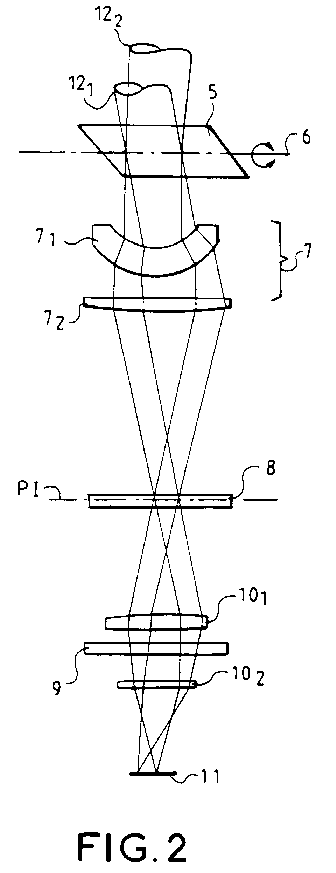

La figure 2 illustre un mode de réalisation d'un dispositif selon l'invention.

Le dispositif selon l'invention reçoit le rayonnement émis par la scène observée et comporte successivement centré sur le même axe optique, un miroir 5 oscillant autour d'un axe de rotation 6, perpendiculaire à l'axe optique, pour le balayage de la scène et un objectif comportant par exemple une première lentille convergente $7_1$ et une deuxième lentille convergente $7_2$ réalisées par exemple en germanium. Pour intégrer la fonction d'analyse spectrale dans la combinaison optique de la caméra infrarouge, le dispositif selon l'invention comporte, d'une part, dans le plan focal intermédiaire PI, représenté sur la figure 2 par un segment de droite en trait interrompu, un masque 8 comportant un nombre déterminé de fentes rectangulaires parallèles non représentées, et comporte, d'autre part, une optique dispersive 9 disposée au voisinage d'une optique de reprise constituée dans ce mode de réalisation d'une première et d'une deuxième lentille convergente respectivement $10_1$ et $10_2$, et un détecteur 11 sensible au rayonnement. Cette optique dispersive 9 peut être réalisé par exemple par un prisme, ou par un réseau de diffraction. De préférence le dispositif utilise un réseau de diffraction comportant une lame sur laquelle sont gravés des traits diffractant le rayonnement et régulièrement espacés.

Afin de maximiser l'efficacité de la diffraction et d'éviter la présence d'ordres supérieurs de diffraction, le réseau doit être "blazé", terme signifiant que le profil des traits du réseau doit être adapté afin de privilégier la diffraction dans une direction déterminée.

Sur la figure 2 deux faisceaux lumineux cylindriques $12_1$ et $12_2$ issus de l'objectif afocal de tête et en provenance de deux points différents de la scène observée sont représentés. Les faisceaux $12_1$ et $12_2$ sont réfléchis par le miroir 5 sur l'objectif 7 comportant la première lentille convergente $7_1$ et la deuxième lentille convergente $7_2$. Les deux faisceaux lumineux $12_1$ à $12_2$ sont ensuite concentrés vers le foyer image de l'objectif, ou plan intermédiaire image PI, dans lequel est disposé le masque 8. L'optique dispersive 9 est disposée de façon préférentielle en faisceaux parallèles ou quasi-parallèles entre la première lentille $10_1$ et la deuxième lentille $10_2$ formant l'optique de reprise. Cette disposition particulière permet en général un fonctionnement optimum de l'optique dispersive 9. La déviation est réalisée selon la plus grande dimension du détecteur 11 dans une direction perpendiculaire à celle de la direction du balayage angulaire du champ donné par le miroir oscillant 5.

Dans les figures qui suivent, les éléments homologues à ceux de la figure 2 seront référencés par le même repère.

Dans le mode de réalisation du dispositif selon l'invention représenté à la figure 2, le grandissement de l'image entre le plan PI du masque 8 et le plan de l'image finale focalisée sur le détecteur 11 est voisin de l'unité.

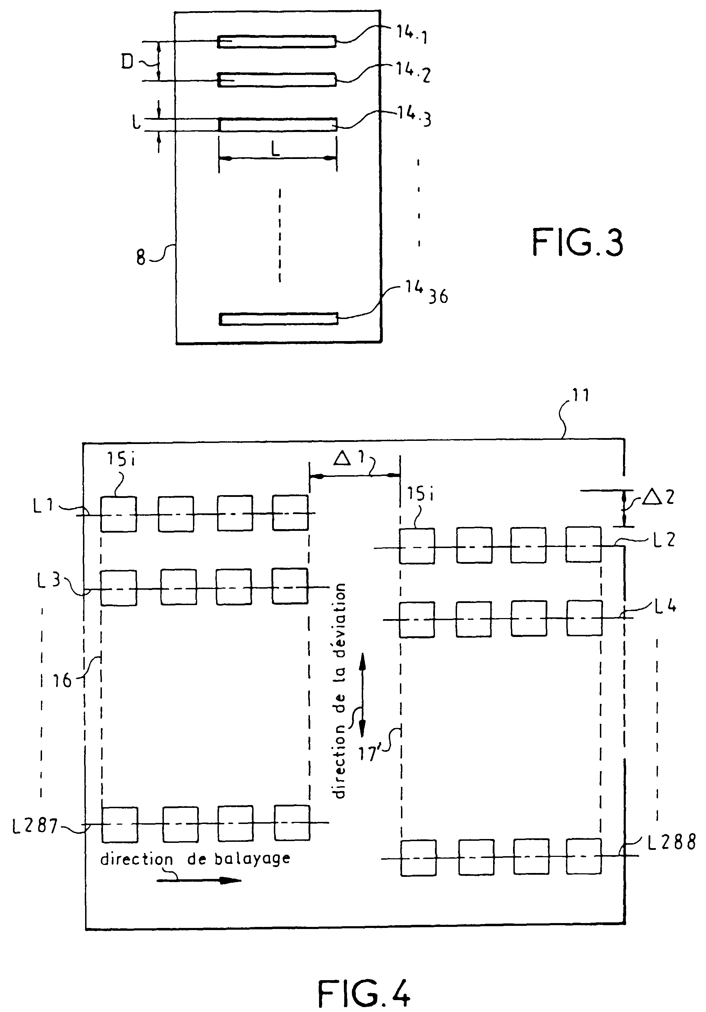

A titre d'exemple numérique, pour un dispositif selon l'invention permettant l'analyse d'une scène dans huit longueurs d'onde différentes et équidistantes $\lambda_1$ à $\lambda_8$, le masque 8 présente approximativement la découpe représentée sur la figure 3. Le masque 8 comporte trente-six fentes rectangulaires $13_1$ à $13_{36}$ parallèles de longueur L = 400 micromètres et de largeur l = 30 micromètres, l'écart entre deux fentes successives étant de D = 240 micromètres axe à axe.

Une géométrie possible d'un détecteur 11 de type barrette est illustrée par la figure 4. Le détecteur 11 comporte dans un même plan deux cent quatre-vingt huit lignes successives parallèles $L_1$ à $L_{288}$ de quatre détecteurs élémentaires 15i. Chaque détecteur élémentaire 15i est représenté par un carré d'environ 30 micromètres de côté. Ils sont espacés d'un écart d'environ 15 micromètres bord à bord.

Les lignes $L_1$ à $L_{288}$ sont disposées suivant une première colonne 16 et une deuxième colonne 17' parallèles comportant respectivement les lignes impaires $L_1$ à $L_{287}$ et les lignes paires $L_2$ à $L_{288}$. Les deux colonnes 16 et 17' sont espacées latéralement d'un écart $\Delta_1$ d'environ 70 micromètres et longitudinalement d'un écart $\Delta_2$ d'environ 30 micromètres correspondant à la largeur d'une ligne de détecteurs élémentaires 15i.

Le balayage angulaire du champ est effectué selon la direction ligne telle que représentée par la flèche sur la figure 4. Les signaux issus des quatre détecteurs élémentaires 15i constituant une ligne sont retardés et sommés dans un circuit de lecture, non représenté. Le traitement des signaux connu sous le nom de TDI abréviation anglo-saxonne pour "Time Delay and Integration" permet d'améliorer le rapport signal à bruit, l'ensemble des quatre détecteurs élémentaires 15i d'une ligne se comportant alors comme un détecteur unique de qualité supérieure. Avantageusement le dispositif selon l'invention permet de conserver sans modification le traitement TDI.

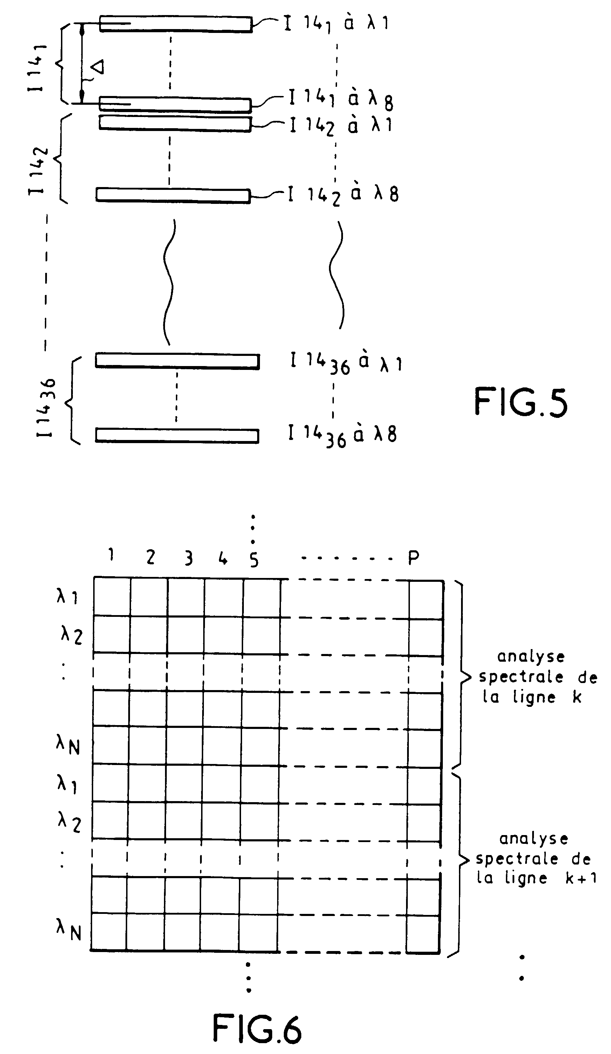

La figure 5 représente une image du masque 8 représenté à la figure 3 dans le plan du détecteur 11.

En considérant par exemple l'image $I13_1$ de la première fente $13_1$ donnée par l'objectif de reprise $10_1$, $10_2$ et l'optique dispersive 9, l'image est analysée dans le plan du détecteur 11 par les lignes $L_1$ à $L_8$ de détecteurs élémentaires 15i telles que représentées sur la figure 4.

La première ligne $L_1$ analyse la longueur d'onde $\lambda_1$, la deuxième ligne $L_2$ analyse la longueur d'onde $\lambda_2$, et ainsi de suite jusqu'à la huitième ligne $L_8$ qui analyse la longueur d'onde $\lambda_8$. La neuvième ligne $L_9$ analyse la longueur d'onde $\lambda_1$ correspondant à la deuxième fente $13_2$ et ainsi de suite. Le dispositif permet donc d'analyser les images des trente-six fentes $13_1$ à $13_{36}$ régulièrement espacées dans le champ, ceci selon huit longueurs d'onde différentes.

La dispersion $\Delta$ de l'image de la première fente $13_1$ entre les longueurs d'onde $\lambda_1$ et $\lambda_8$ permet à l'image de cette fente $13_1$ dans le plan du détecteur 11 de se déplacer entre la première ligne $L_1$ et la huitième ligne $L_8$ ce qui correspond à une valeur linéaire égale à sept fois l'intervalle entre deux lignes successives.

A titre d'exemple numérique, pour $\Delta = 7 \times 30$ micromètres = 210 micromètres, l'optique dispersive 9 doit donner une dispersion angulaire égale à $\Delta / f$, où f correspond à la distance focale de la lentille $10_2$.

Si f = 25 mm, la déviation angulaire doit donc être de 8,4 milliradians au niveau de l'optique dispersive 9.

La figure 6 illustre une image spectrale de la scène obtenue par le dispositif selon l'invention. Cette image spectrale correspond au résultat obtenu dans l'hypothèse où un nombre déterminé de N longueurs d'onde $\lambda_1$ à $\lambda_N$ sont analysées. Une fente déterminée du masque 8 isole l'image d'un point ou d'une partie de ligne de la scène. Cette image est dispersée le long des lignes du détecteur 11, afin d'éviter le chevauchement des longueurs d'onde $\lambda_1$ à $\lambda_N$ sur le détecteur 11, l'espacement des fentes $13_1$ à $13_{36}$ du masque 8 doit correspondre à un nombre N déterminé de lignes, N=8 dans l'exemple décrit, la largeur d'une fente correspondant à un pixel. Le miroir oscillant 5 déplace l'image de la scène devant chaque fente d'entrée $13_1$ à $13_{36}$ et effectue donc ainsi l'analyse spectrale de tous les points successifs d'un nombre déterminé de lignes de la scène. Le nombre de lignes de la scène est au maximum égal au nombre de lignes du détecteur 11, soit 288 lignes dans l'exemple décrit, divisé par le nombre N de longueurs d'onde, 8 dans l'exemple décrit. L'image spectrale de la figure 6 représente l'analyse spectrale d'une première ligne k de la scène et d'une deuxième ligne k+1. A chaque ligne de la scène isolée par le masque 8 correspond un nombre N de lignes dans l'image spectrale, chaque ligne correspondant à une longueur d'onde $\lambda_1$ à $\lambda_N$ et à chaque colonne correspond un pixel numéroté de 1 à p, p étant typiquement voisin de 500.

Il est à remarquer que le dispositif selon l'invention n'exploite qu'une partie du flux lumineux incident au niveau du plan image intermédiaire PI puisque le masque 8 ne laisse passer en moyenne qu'une ligne sur N.

En supposant que le flux est également réparti entre les diverses longueurs d'onde $\lambda_1$ à $\lambda_N$, le signal utile S qui serait obtenu sans les fentes $13_1$ à $13_{36}$ est alors réduit dans un facteur N; le rapport signal à bruit est donc dégradé du fait de la dispersion des différentes longueurs d'onde sur le détecteur 11.

Pour pallier cet inconvénient, une solution consiste à sommer les images par une méthode connue de post-intégration pour retrouver le rapport signal à bruit précédent. Il faut alors sommer $N^2$ images ce qui peut dans certains cas être un nombre trop élevé. Une solution consiste alors à rendre réfléchissante la face arrière du masque 8 comportant les fentes $13_1$ à $13_{36}$. Le détecteur 11 se réfléchit dans le miroir et comme il est refroidi, le flux de fond qu'il reçoit est alors réduit d'un facteur N si l'émission propre des optiques intermédiaires est négligée. Le bruit est alors divisé par un facteur $\sqrt{N}$ et le rapport signal à bruit n'est plus dégradé que d'un facteur $\sqrt{N}$ seulement et il ne faut plus sommer que N images pour retrouver le rapport signal à bruit initial. De plus la sommation peut s'effectuer par intégration dans le détecteur 11, puisque celui-ci reçoit un flux de fond N fois moins grand et que sa dynamique n'est pas utilisée. La sommation par intégration peut se faire en ralentissant la vitesse de balayage du miroir 5 d'un facteur N ou, si le miroir 5 n'est pas ralenti, au détriment d'un facteur N sur la résolution spatiale en sommant un nombre N déterminé de pixels consécutifs d'une même ligne.

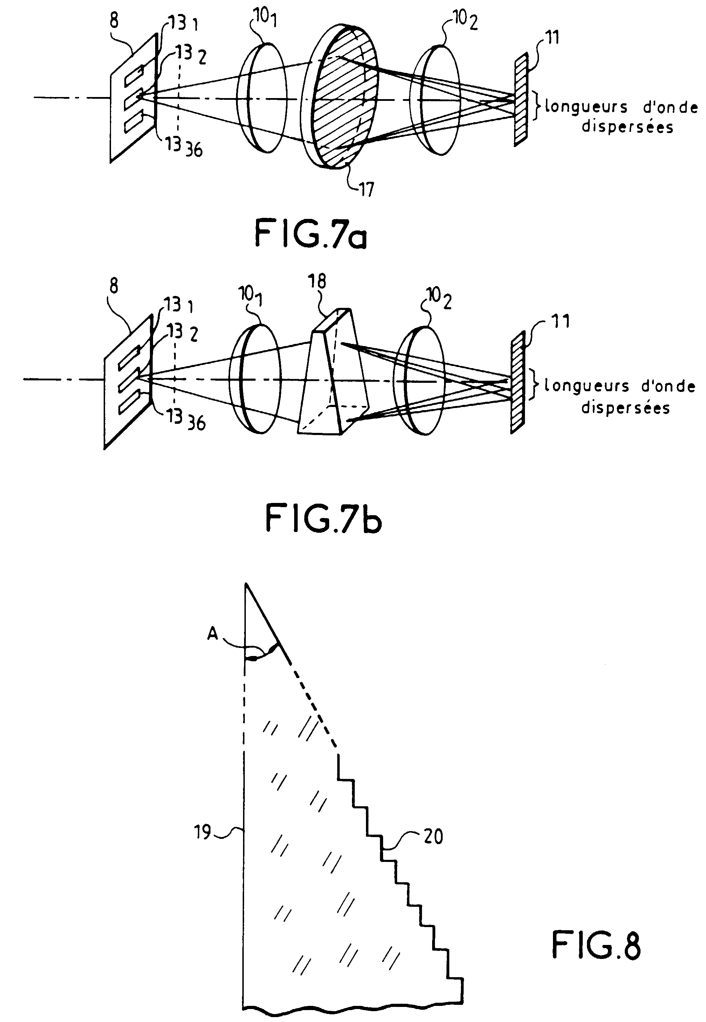

Les figures 7a et 7b illustrent respectivement un schéma optique simplifié d'un dispositif selon l'invention dans lequel l'optique dispersive 9, est réalisée selon deux modes de réalisation différents.

Sur les figures 7a et 7b, le masque 8 comportant les fentes rectangulaires $13_1$ à $13_{36}$ laisse passer le rayonnement d'une partie déterminée de l'image de la scène. Seul le rayonnement issu de la fente $13_2$ est représenté afin de ne pas surcharger le dessin. Ce rayonnement est recueilli par une optique de reprise $10_1$ et $10_2$ et il est dispersé sur un détecteur 11 à travers une optique dispersive 17 sur la figure 7a et 18 sur la figure 7b.

Sur la figure 7a, l'optique dispersive 17 est un réseau constitué de traits diffractant le rayonnement infrarouge, par exemple réalisé par gravure mécanique ou par des méthodes holographiques sur un substrat transparent au rayonnement infrarouge. Le pas P du réseau 17 est calculé, dans le cas où celui-ci fonctionne dans le premier ordre de diffraction, au moyen de la formule suivante :

$$P = \frac{\lambda}{\text{Sin}\theta}$$

où $\theta$ est l'angle de déviation entre le rayon incident sur l'optique dispersive 17 et le rayon diffracté et $\lambda$ la longueur d'onde correspondante.

Une application numérique est donnée ci-après pour huit longueurs d'ondes différentes $\lambda_1$ à $\lambda_8$ :

Si $\lambda_1$ = 8 micromètres et $\lambda_8$ = 10,5 micromètres et si une déviation relative $\theta_8$-$\theta_1$ entre les longueurs d'onde $\lambda_8$ et$\lambda_1$, est choisie égale à 8,4 milliradians, la valeur du pas P du réseau 17 est alors égale à P = 0,3 millimètres, $\theta_1$ = 26,6 milliradians et $\theta_8$ = 35 milliradians.

La figure 7b illustre un schéma optique correspondant à celui de la figure 7a mais où l'optique dispersive 18 est constituée par un prisme dispersif, c'est-à-dire réalisé dans un matériau optique dont l'indice de réfraction varie de façon importante avec la longueur d'onde. Le prisme 18 est situé au voisinage de l'optique de reprise $10_1$ et $10_2$ en regard du détecteur 11.

Avantageusement sans sortir du cadre du dispositif faisant l'objet de l'invention, la fonction d'analyse spectrale peut être escamotable pour revenir à la fonction d'imagerie de la caméra infrarouge et inversement. Ceci est obtenu par commutation du masque 8 et de l'élément dispersif 9 hors du cheminement des rayons. Il convient alors de corriger l'angle de déviation initial $\theta_1$ afin d'éviter un décalage général de l'image lors du retour à la fonction d'imagerie. Ceci est réalisé en ajoutant par exemple à l'optique dispersive 9 un prisme compensateur pas ou peu dispersif de petit angle au sommet, de l'ordre de quelques milliradians, permettant, en introduisant une déviation égale et opposée, de compenser l'angle $\theta_1$ de sorte que les rayons correspondants à la longueur d'onde $\lambda_1$ traversent l'ensemble optique dispersive et prisme compensateur sans être déviés.

La figure 8 illustre un mode de réalisation d'une optique diffractive avec compensation de la déviation globale. Cette optique comporte un élément correcteur 19 en forme de prisme réalisé par exemple en germanium d'angle au sommet A déterminé permettant de compenser l'effet de déviation globale de l'optique diffractive représentée sur la figure 8 par un réseau de diffraction 20. Le réseau de diffraction 20 est avantageusement réalisé par gravure mécanique ou holographique sur une des faces du prisme 19, par exemple sur celle en regard du détecteur 11. L'angle au sommet A formé par le prisme compensateur, permettant de compenser la déviation $\theta_1$ du rayonnement dont la longueur d'onde est égale à $\lambda_1$, est déterminé par la formule approximative suivante :

$$A = \theta_1 / (n-1)$$

où n est l'indice de réfraction du prisme 19, égal à 4 pour le germanium et $\theta_1$ = 26,6 milliradians :
Soit : A = 8,9 milliradians.

Afin d'éviter les recouvrements entre les images des fentes successives et correspondant à des longueurs d'onde extérieures au domaine spectral défini par les longueurs d'onde $\lambda_1$à$\lambda_8$, et pour lesquelles les détecteurs élémentaires 15i ont une sensibilité non nulle, il peut être avantageux d'ajouter un élément de filtrage ne laissant passer que les longueurs d'onde utiles.

A cet effet un filtre interférentiel non représenté peut être disposé dans le chemin optique du dispositif, par exemple entre l'optique de reprise $10_1$ et $10_2$ et le masque 8, pour permettre de limiter le domaine spectral, par exemple, entre les longueurs d'onde 8 et 10,5 micromètres.

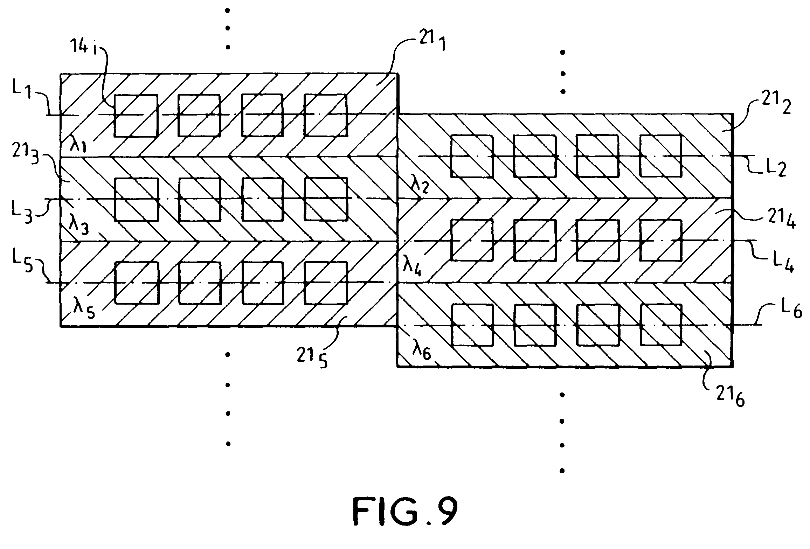

Avantageusement une implantation spatiale de filtres interférentiels sur les lignes $L_1$ à $L_{288}$ de détecteurs élémentaires 15i permet de limiter le domaine des longueurs d'onde qui sont analysées. Cette implantation est illustrée par la figure 9.

Afin de limiter le flux reçu par chaque détecteur 15i au strict nécessaire, des filtres interférentiels $21_1$ à $21_{288}$, ou microfiltres, peuvent être placés sur la face sensible du détecteur 11 pour limiter le domaine spectral plus fortement autour de chacune des longueurs d'onde $\lambda_1$ à $\lambda_8$ effectivement reçues par chaque ligne de détecteur $L_1$ à $L_{288}$. Ces filtres $21_1$ à $21_{288}$ étant refroidis, ceci permet en outre de réduire le bruit de fond thermique et d'améliorer le rapport signal à bruit. Ces filtres sont avantageusement réalisés par des techniques de dépôt sous vide sur le substrat du détecteur. Dans la réalisation décrite à titre d'exemple, le filtre $21_1$ est centré sur $\lambda_1$ et ainsi de suite jusqu'au filtre $21_8$ centré sur $\lambda8$ ; le filtre $21_9$ est centré sur $\lambda_1$ et ainsi de suite.

## Revendications

1. Dispositif optique d'imagerie permettant l'analyse spectrale d'une scène comportant, centré sur un même axe optique, un miroir (5) oscillant autour d'un axe de rotation (6) perpendiculaire à l'axe optique du dispositif pour le balayage de la scène et réfléchissant le rayonnement émis par la scène sur un objectif d'entrée (7), un plan image intermédiaire (PI) correspondant au plan focal de l'objectif d'entrée (7), une optique de reprise ($10_1$, $10_2$) concentrant le rayonnement sur la face sensible d'un détecteur (11), caractérisé en ce qu'il comporte en outre pour l'analyse spectrale de la scène, d'une part, un masque (8) disposé dans le plan image intermédiaire (PI) et comportant un nombre déterminé de fentes ($13_1$ à $13_{36}$) laissant passer chacune une partie déterminée de l'image de la scène, la grande dimension des fentes étant parallèle à des lignes de détecteurs élémentaires constituant le détecteur (11) et perpendiculaire à l'axe de rotation (6) du miroir (5), et d'autre part, une optique dispersive (9) disposée dans le chemin optique du dispositif au voisinage de l'optique de reprise ($10_1$, $10_2$) et séparant un nombre déterminé de longueurs d'onde issues du masque (8), l'optique dispersive (9) étant déterminée pour disperser chaque longueur d'onde dans une direction respective déterminée pour couvrir toute la face sensible du détecteur (11) lors du balayage de la scène.

2. Dispositif selon la revendication 1, caractérisé en ce que les fentes ($13_1$ à $13_{36}$) sont rectangulaires.

3. Dispositif selon l'une quelconque des revendications 1 à 2, caractérisé en ce que la face arrière du masque (8), en regard du détecteur (11), est réfléchissante.

4. Dispositif selon l'une quelconque des revendications 1 à 3, caractérisé en ce que l'optique dispersive (9) comporte un réseau de diffraction (17) gravé sur un substrat transparent au rayonnement émis par la scène pour privilégier la diffraction d'une longueur d'onde déterminée dans une direction déterminée.

5. Dispositif selon la revendication 4, caractérisé en ce que le réseau de diffraction (17) est gravé mécaniquement sur le substrat.

6. Dispositif selon la revendication 4, caractérisé en ce que le réseau de diffraction (17) est gravé par une méthode holographique sur le substrat.

7. Dispositif selon l'une quelconque des revendications 1 à 3, caractérisé en ce que l'optique dispersive (9) comporte un prisme (18) transparent au rayonnement émis par la scène.

8. Dispositif selon l'une quelconque des revendications 1 à 7, caractérisé en ce qu'un filtre interférentiel, ne laissant passer qu'un nombre déterminé de longueurs d'onde, est disposé dans le chemin optique du dispositif.

9. Dispositif selon l'une quelconque des revendications 1 à 8, caractérisé en ce que les lignes ($L_1$ à $L_{288}$) de détecteurs élémentaires (15i) sont disposées dans un même plan suivant une première colonne (16) et une deuxième colonne (17') parallèles comportant respectivement les lignes impaires ($L_1$ à $L_{287}$) et les lignes paires ($L_2$ à $L_{288}$), les deux colonnes (16 et 17) étant espacées latéralement d'un premier écart fixe déterminé ($\Delta_1$) et longitudinalement d'un deuxième écart fixe déterminé ($\Delta_2$).

10. Dispositif selon l'une quelconque des revendications 1 à 9, caractérisé en ce que le masque (8) et l'optique dispersive (9; 17; 18) sont escamotables par des moyens mécaniques permettant le passage de la fonction d'analyse spectrale à la fonction d'imagerie du dispositif et inversement.

11. Dispositif selon la revendication 10, caractérisé en ce que l'optique dispersive (9; 17; 18) comporte, en outre, une optique correctrice (19) permettant de compenser la déviation de la longueur d'onde du rayonnement lors du passage de la fonction d'analyse spectrale à la fonction d'imagerie pour conserver la superposition de l'image du masque (8) avec la face sensible du détecteur (11).

12. Dispositif selon la revendication 11, caractérisé en ce que l'optique correctrice (19) comporte un prisme dont l'angle au sommet (A) est déterminé par le rapport $\theta$ /(n -1), où $\theta$ est l'angle de déviation du rayon incident déterminé par l'optique dispersive (9; 17 ; 18) pour une longueur d'onde déterminée et n l'indice de réfraction du prisme (19).

13. Dispositif selon l'une quelconque des revendications 1 à 12, caractérisé en ce que chaque ligne ($L_1$ à $L_{288}$) de détecteurs élémentaires (15i) est recouverte d'un filtre interférentiel ($21_1$ à $21_{288}$) ne laissant passer que la longueur d'onde respective attribuée à chaque ligne ($L_1$ à $L_{288}$) de détecteurs élémentaires (15i).

**Patentansprüche**

1. Optische Abbildungsvorrichtung, die eine Spektralanalyse einer Szene erlaubt, wobei die Vorrichtung zentriert auf eine gemeinsame optische Achse einen Spiegel (5), der um eine zur optischen Achse der Vorrichtung senkrechte Schwenkachse (6) schwingt, um die Szene abzutasten und die von der Szene reflektierte Strahlung auf ein Eingangsobjektiv (7) zu reflektieren, eine Zwischenbildebene (PI) entsprechend der Brennebene des Eingangsobjektivs (7) und eine Bildoptik ($10_1$, $10_2$) aufweist, die die Strahlung auf die lichtempfindliche Fläche eines Detektors (11) konzentriert, dadurch gekennzeichnet, daß die Vorrichtung weiter für die spektrale Analyse der Szene einerseits eine Maske (8), die in der Zwischenbildebene (PI) liegt und eine bestimmte Anzahl von Schlitzen ($13_1$ bis $13_{36}$) aufweist, die je einen bestimmten Teil des Bilds der Szene durchlassen, wobei die Hauptabmessung der Schlitze parallel zu Zeilen von Elementardetektoren, die den Detektor (11) bilden, und senkrecht zur Schwenkachse (6) des Spiegels (5) verläuft, und andererseits eine Streuoptik (9) aufweist, die im optischen Weg der Vorrichtung in der Nähe der Bildoptik ($10_1$,

$10_2$) liegt und eine bestimmte Anzahl von aus der Maske (8) austretenden Wellenlängen separiert, wobei die Streuoptik (9) so bestimmt ist, daß sie jede Wellenlänge in einer Richtung streut, die jeweils so bestimmt ist, daß die ganze lichtempfindliche Fläche des Detektors (11) bei der Abtastung der Szene überdeckt wird.

2. Vorrichtung nach Anspruch 1, dadurch gekennzeichnet, daß die Schlitze ($13_1$ bis $13_{36}$) rechtwinklig sind.

3. Vorrichtung nach einem beliebigen der Ansprüche 1 und 2, dadurch gekennzeichnet, daß die Rückseite der Maske (8) gegenüber dem Detektor (11) reflektierend ist.

4. Vorrichtung nach einem beliebigen der Ansprüche 1 bis 3, dadurch gekennzeichnet, daß die Streuoptik (9) ein Beugungsgitter (17) enthält, das auf ein für die von der Szene ausgesendete Strahlung transparentes Substrat graviert ist, um die Beugung einer bestimmten Wellenlänge in einer bestimmten Richtung zu privilegieren.

5. Vorrichtung nach Anspruch 4, dadurch gekennzeichnet, daß das Beugungsgitter (17) mechanisch auf das Substrat graviert ist.

6. Vorrichtung nach Anspruch 4, dadurch gekennzeichnet, daß das Beugungsgitter (17) durch eine holographische Methode auf das Substrat graviert ist.

7. Vorrichtung nach einem beliebigen der Ansprüche 1 bis 3, dadurch gekennzeichnet, daß die Streuoptik (9) ein für die von der Szene ausgehende Strahlung transparentes Prisma (18) enthält.

8. Vorrichtung nach einem beliebigen der Ansprüche 1 bis 7, dadurch gekennzeichnet, daß ein Interferenzfilter, das nur eine bestimmte Anzahl von Wellenlängen durchläßt, im optischen Weg der Vorrichtung angeordnet ist.

9. Vorrichtung nach einem beliebigen der Ansprüche 1 bis 8, dadurch gekennzeichnet, daß die Zeilen ($L_1$ bis $L_{288}$) von Elementardetektoren ($15_i$) in einer gemeinsamen Ebene gemäß einer ersten Spalte (16) und einer zweiten, dazu parallelen Spalte (17') angeordnet sind, die die ungeradzahligen Zeilen ($L_1$ bis $L_{287}$) bzw. die geradzahligen Zeilen ($L_2$ bis $L_{288}$) enthält, wobei die beiden Spalten (16, 17) seitlich einen ersten festen, bestimmten Abstand ($\Delta 1$) und in Längsrichtung einen zweiten festen, bestimmten Abstand ($\Delta 2$) aufweisen.

10. Vorrichtung nach einem beliebigen der Ansprüche 1 bis 9, dadurch gekennzeichnet, daß die Maske (8) und die Streuoptik (9; 17; 18) durch mechanische Mittel wegschwenkbar sind, so daß ein Übergang zwischen der Funktion der Spektralanalyse und der Abbildungsfunktion der Vorrichtung und umgekehrt möglich ist.

11. Vorrichtung nach Anspruch 10, dadurch gekennzeichnet, daß die Streuoptik (9; 17; 18) außerdem eine Korrekturoptik (19) enthält, mit der die Ablenkung der Wellenlänge der Strahlung beim Übergang von der Spektralanalysefunktion zur Abbildungsfunktion kompensiert werden kann, um die Zuordnung des Bilds der Maske (8) zur lichtempfindlichen Fläche des Detektors (11) beizubehalten.

12. Vorrichtung nach Anspruch 11, dadurch gekennzeichnet, daß die Korrekturoptik (19) ein Prisma aufweist, dessen Scheitelwinkel (A) durch das Verhältnis ($\Theta/n$-1) bestimmt wird, wobei $\Theta$ der Ablenkungswinkel des ankommenden Strahls, der durch die Streuoptik (9; 17; 18) für eine bestimmte Wellenlänge bestimmt wird, und n der Beugungsindex des Prismas (19) ist.

13. Vorrichtung nach einem beliebigen der Ansprüche 1 bis 12, dadurch gekennzeichnet, daß jede Zeile ($L_1$ bis $L_{288}$) von Elementardetektoren ($15_i$) durch ein Interferenzfilter ($21_1$ bis $21_{288}$) bedeckt ist, das nur die Wellenlänge durchläßt, die jeweils einer Zeile ($L_1$ bis $L_{288}$) von Elementardetektoren ($15_i$) zugewiesen ist.

**Claims**

1. Optical imaging device allowing spectral analysis of a scene, including, centred on the same optical axis, a mirror (5) which oscillates about an axis of rotation (6) perpendicular to the optical axis of the device in order to scan the scene and reflects the radiation emitted by the scene onto an input objective (7), an intermediate image plane (PI) corresponding to the focal plane of the input objective (7), and a recovery optical system ($10_1$, $10_2$) which concentrates the radiation onto the sensitive face of a detector (11), characterized in that it furthermore includes, for spectral analysis of the scene, on the one hand a mask (8) arranged in the intermediate image plane (PI) and including a defined number of slits ($13_1$ to $13_{36}$) which each transmit a defined part of the image of the scene, the long dimension of the slits being parallel to rows of elementary detectors constituting the detector (11) and perpendicular to the axis of rotation (6) of the mirror (5) and, on the other hand, a dispersive optical system (9) arranged along the optical path of the device in the vicinity of the recovery optical system ($10_1$, $10_2$) and

splitting a defined number of wavelengths output by the mask (8), the dispersive optical system (9) being designed to disperse each wavelength in a defined respective direction in order to cover all of the sensitive face of the detector (11) when the scene is scanned.

2. Device according to Claim 1, characterized in that the slits ($13_1$ to $13_{36}$) are rectangular.

3. Device according to either of Claims 1 and 2, characterized in that the rear face of the mask (8), facing the detector (11) is reflective.

4. Device according to any one of Claims 1 to 3, characterized in that the dispersive optical system (9) includes a diffraction grating (17) etched onto a substrate which is transparent to the radiation emitted by the scene in order to promote the diffraction of a defined wavelength in a defined direction.

5. Device according to Claim 4, characterized in that the diffraction grating (17) is etched onto the substrate mechanically.

6. Device according to Claim 4, characterized in that the diffraction grating (17) is etched onto the substrate using a holographic method.

7. Device according to any one of Claims 1 to 3, characterized in that the dispersive optical system (9) includes a prism (18) which is transparent to the radiation emitted by the scene.

8. Device according to any one of Claims 1 to 7, characterized in that an interference filter which transmits only a defined number of wavelengths is arranged along the optical path of the device.

9. Device according to any one of Claims 1 to 8, characterized in that the rows ($L_1$ to $L_{288}$) of elementary detectors ($15_i$) are arranged in the same plane, as a first column (16) and a second column (17) which are parallel and respectively include the odd rows ($L_1$ to $L_{287}$) and the even rows ($L_2$ to $L_{288}$), the two columns (16 and 17) being separated laterally by a first defined fixed separation ($\Delta_1$) and longitudinally by a second defined fixed separation ($\Delta_2$).

10. Device according to any one of Claims 1 to 9, characterized in that the mask (8) and the dispersive optical system (9; 17; 18) can be retracted by mechanical means, making it possible to change from the spectral analysis function to the imaging function of the device, and vice versa.

11. Device according to Claim 10, characterized in that the dispersive optical system (9; 17; 18) furthermore includes a corrective optical system (19) making it possible to compensate for the deviation in the wavelength of the radiation when changing from the spectral analysis function to the imaging function, in order to conserve the superposition of the image of the mask (8) with the sensitive face of the detector (11).

12. Device according to Claim 11, characterized in that the corrective optical system (19) includes a prism whose vertex angle (A) is defined by the ratio $\theta/(n-1)$, where $\theta$ is the angle of deviation of the incident ray, defined by the dispersive optical system (9; 17; 18) for a defined wavelength, and n is the refractive index of the prism (19).

13. Device according to any one of Claims 1 to 12, characterized in that each row ($L_1$ to $L_{288}$) of elementary detectors ($15_i$) is covered with an interference filter ($21_1$ to $21_{288}$) which transmits only the respective wavelength assigned to each row ($L_1$ to $L_{288}$) of elementary detectors ($15_i$).

FIG.1

longueurs d'onde de $2_1$

longueurs d'onde de $2_2$

longueurs d'onde de $2_3$

longueurs d'onde de $2_4$

EP 0 642 005 B1

# FIG. 2

FIG.3

FIG.4

I 14₁ à λ1

I 14₁ à λ8
I 14₂ à λ1

I 14₂ à λ8

I 14₃₆ à λ1

I 14₃₆ à λ8

FIG.5

FIG.6

analyse
spectrale de
la ligne k

analyse
spectrale de
la ligne k+1

FIG.7a

FIG.7b

FIG.8

FIG.9